(19) Europäisches Patentamt
European Patent Office
Office européen des brevets

(11) EP 4 333 356 A1

(12) EUROPEAN PATENT APPLICATION

(43) Date of publication:
06.03.2024 Bulletin 2024/10

(51) International Patent Classification (IPC):
H04L 9/00 (2022.01)    G06F 8/40 (2018.01)

(21) Application number: 22315194.5

(52) Cooperative Patent Classification (CPC):
H04L 9/008; G06F 8/443

(22) Date of filing: 29.08.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Zama SAS
75008 Paris (FR)

(72) Inventors:
• Stoian, Andrei
91260 Juvisy-sur-Orge (FR)
• Sahin, Umut
75005 Paris (FR)

(74) Representative: DeltaPatents B.V.
Fellenoord 370
5611 ZL Eindhoven (NL)

(54) **OPTIMIZING A COMPUTER PROGRAM FOR A TABLE LOOKUP OPERATION**

(57) The invention relates to a computer-implemented method (800) of optimizing a computer program for an execution environment that supports a table lookup operation. The computer program is represented as a computation graph, wherein respective nodes of the computation graph represent respective operations. For respective nodes, it is determined whether or not the respective node can be implemented by a table lookup operation. For a node that can be implemented by a table lookup operation, it is determined that one or more further nodes of the computation graph can be fused into the table lookup operation. A transformed representation of the computer program is output wherein the node and the one or more further nodes are fused into a single table lookup operation.

Fig. 4

**Description**

**FIELD OF THE INVENTION**

The invention relates to a computer-implemented method of optimizing a computer program for an execution environment that supports a table lookup operation, and to a corresponding system. The invention further relates to a computer-readable medium.

**BACKGROUND OF THE INVENTION**

Homomorphic cryptography allows one to execute computer programs, e.g., circuit evaluations, over encrypted data by a party without that party being able to decrypt. For example, input data and computation results may be received and returned in encrypted form. Intermediate data, e.g., an internal state of the computation, may also be in encrypted form. Even though the output of the computer program is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted. In particular, homomorphic cryptography techniques exist that can be used, at least in principle, to compute any function on encrypted data. Such techniques are referred to as "fully homomorphic encryption" (FHE) techniques.

Homomorphic encryption techniques typically provide an execution environment that supports a relatively limited set of operations. More complex operations can then be implemented in terms of this set of supported operations. The supported operations typically include addition and subtraction of integer ciphertexts; and multiplying an integer ciphertext by a known scalar. Homomorphic encryption techniques can also support multiplication of encrypted integer ciphertexts, for example.

The execution environment provided by various homomorphic encryption techniques also supports a table lookup operation. In particular, the table lookup operation can be a programmable bootstrapping (PBS) operation. Such an operation can not only implement a table lookup operation but also bring noise that is present in the used ciphertexts back to a fixed level. Homomorphic encryption techniques supporting the PBS operation are also referred to as TFHE-like homomorphic encryption schemes. Such a scheme is described in I. Chillotti et al., "Programmable bootstrapping enables efficient homomorphic inference of deep neural networks", Cyber Security Cryptography and Machine Learning (CSCML 2021), vol. 12716 of Lecture Notes in Computer Science, pp: 1-19, Springer, 2021 (incorporated herein by reference). Generally, TFHE-like homomorphic encryption schemes can be based on lattice encryption, e.g., LWE or NTRU encryption.

Although the computational efficiency of homomorphic encryption techniques has greatly improved over the last years, there still remains a significant overhead, especially when applying the techniques to relatively large amounts of data and/or relatively complex computations. In particular, compared to other operations such as homomorphic addition or scalar multiplication, the overhead of performing a table lookup remains significant. Accordingly, there is a need to optimize computer programs for efficient execution by a homomorphic encryption execution environment that supports a table lookup operation.

Table lookup operations are also used in various other execution environments. For example, in hardware, a lookup table can be used to compute an arbitrary function. Such a hardware lookup table can for example be implemented through a slice of RAM (random access memory) or ROM (read only memory). Lookup tables can be useful to speed up computations that are applied to particularly large amounts of data, such as in a neural network accelerator circuit for training or evaluating a neural network. For example, an activation function of the neural network may be implemented as a lookup table. Also in this setting, it is important to optimize computer programs for efficient execution.

**SUMMARY OF THE INVENTION**

It would be desirable to optimize a computer program for an execution environment that supports a table lookup operation, in particular by minimizing the number of table lookup operations that are needed to execute the computer program in the execution environment.

In accordance with a first aspect of the invention, a computer-implemented method of optimizing a computer program and a corresponding system are provided, as defined by claims 1 and 14, respectively. In accordance with a further aspect of the invention, a computer-readable medium is provided as defined by claim 15.

Various embodiments relate to the optimization of a computer program for an execution environment that supports a table lookup operation. To this end, a representation may be obtained of the computer program as a computation graph. Respective nodes of the computation graph may represent respective operations. The computation graph is in many cases a tensor computation graph, where a node represents an operation that is applied to one or more input tensors and results in an output tensor, corresponding to the edges of the graph; however, a computation graph representing only scalars is also possible.

The representation may be transformed in such a way that multiple nodes of the computation graph are implemented as a single table lookup operation (where, in the case of a tensor computation graph, the table lookup operation may represent elementwise application of the table lookup). Implementing multiple nodes jointly as a single table lookup operation may be referred to as "fusing" the nodes (regardless of whether the fusing is performed explicitly by e.g. merging nodes of the computation graph or by outputting a set of instructions for the execution environment based on determining that the nodes are to be implemented as a single table lookup operation). The optimization may output the transformed representation of the computer program in which the fusing has been applied.

Although it is known per se to manually annotate (single-input, single-output) operations of a computer program as being fusable, and to then fuse these operations into a single table lookup operation, e.g., to fuse operations representing respective univariate functions that are consecutively applied to the same input, the inventors envisaged to. improve such fusing. To this end, a computation graph may be obtained. The computation graph may in principle represent any computation that can be carried out by the execution environment. Given this graph, it may be determined automatically, for its respective nodes, whether or not the node can be implemented by a table lookup operation. This determining may be done not just based on the node itself, but also on at least its incoming edges in the computation graph. In particular, the determining may be based on determining whether the output of the node can be expressed as a univariate (elementwise) function of the output of another node, e.g., even if the node has multiple inputs.

For a node that has been determined to be implementable by a table lookup operation, it may be determined that one or more further nodes of the computation graph can be fused into the table lookup operation; for example, the nodes in between the other node and the node itself. In the transformed representation that is output, these further nodes may be fused with the node.

In particular, a mechanism may be provided that can transform a .computational graph, for example of a generic neural network, to a form that fuses univariate operations wherever possible, and that computes the resulting operation using a lookup table. For example, the univariate operations may include, but are not limited to, quantization, normalization, and activation functions.

Generally, by determining in an automated way whether or nodes can be implemented by a table lookup operation, it is possible to find fusable nodes that may not be found when just using a manual annotation, for example, based on the operation itself. For example, a node representing an operation applied (elementwise) to multiple (tensor) inputs may be implementable by a table lookup operation, depending on whether the inputs themselves depend (in an elementwise way) on a common previous input. Thus, whether or not the node is implementable by a table lookup, can depend on what other nodes it is connected to. Determining this manually would be infeasible in particular for large computations. Also, while certain heuristics are known to fuse nodes, such heuristics by nature only work in specific situations and may miss fusing opportunities.

Thus, by automatically determining whether or not nodes can be implemented by table lookup operations, and then fusing such a node with other nodes into a single table lookup operation, efficiency of the computer program in the lookup table-based execution environment can be improved, in particular by reducing the number of table lookup operations performed to execute the computer program. (As also illustrated elsewhere, this does not mean that all nodes that are determined to be implementable by a table lookup table, are actually implemented in this way, e.g., a scalar multiplication that is not preceded or succeeded by other nodes that are implementable by a table lookup, may be implemented natively, e.g., using the native operation of a homomorphic encryption.)

This is beneficial in several settings in particular. One such setting is where the table lookup operation is a hardware lookup table, e.g., in a hardware accelerator. For example, a hardware accelerator with low-bandwidth registers, e.g., of at most 16 or even at most 8 bits. Here, using table lookups to compute groups of uni-variate operations can be faster than performing a series of arithmetic operations that compute the same result. Moreover, the resulting transformed representation is faster than performing consecutive table lookups, one for each univariate operation.

Moreover, when applied to a tensor computational graph that performs the prediction of a quantized neural network, the provided techniques can obviate the need for repeated requantizations of the inputs for each individual univariate operation if several such operations are fused. The method thus obviates the need to quantize univariate operations individually, and, as quantization induces losses in accuracy due to the approximation performed, the accuracy of the final result can be improved.

The provided techniques also allow the design of simpler hardware accelerators, for example of specialised neural network hardware accelerators for quantized neural networks, avoiding inclusion of more complex circuits for normalization, quantization and activation functions.

Another setting where the provided techniques are particularly beneficial, is the setting of homomorphic encryption, e.g., fully homomorphic encryption (FHE). In this setting, an encrypted value may be stored as a ciphertext made up of one or more numeric values, e.g., a LWE or NTRU encryption. The size of such ciphertexts, as well as the computational efficiency of the encrypted computation operations defined over it, may depend on the bitwidth of the inputs to the table lookup operators, meaning that it is beneficial to compute with a low bit width, e.g., of at most 8 or at most 12 bits.

In this setting, by applying the provided techniques, a transformed representation of a computer program may be obtained that is optimized for execution by homomorphic encryption as follows. First, the number of lookup table operations may be minimized. Indeed the computational cost of a lookup table operation is relatively high, and having redundant LUTs increases computation cost. Moreover, homomorphic encryption typically operates over encrypted integer values and so typically uses quantization. By avoiding that quantizers, activations and normalization layers are encoded into TLUs separately, the associated quantization error is avoided that is caused by each LUT individually inducing a quantization error. Moreover, generally, applying a TLU operation may add a small error or noise to the ciphertext, meaning that the result of the TLU may be off by one with a small probability. Chaining multiple TLUs thus increases the probability of error. The provided techniques can reduce the number of TLUs used, thereby also decreasing the probability of error.

The respective nodes of the computation graph may represent respective operations. The optimization may be performed in such a way that operations of a first set of operations are never implemented by the table lookup operation. When the computation graph is defined over tensors, this can for example be the case for operations that are applied to one or more input tensors in a non-elementwise way, such as a convolution. Such operations may be implemented in terms of native operations of the execution environment. (In this case, even though the operation itself, in the sense of the functionality of the operation in the computation graph, is not implemented by a table lookup, it can still be the case that pre- and/or postprocessing, e.g., (de-)quantization, uses a table lookup. This is explained in more detail elsewhere in this specification.)

Nodes representing operations from a second set of operations may be implemented as a lookup table depending on the computation graph, e.g., depending on their incoming and/or outgoing edges. For these nodes, for example, a native implementation of the operation by the execution environment may be available, but the nodes may still be fused with other nodes into a table lookup, if this makes the overall computation more efficient. This can be the case for example for an addition or scalar multiplication. Nodes representing operations from a third set of operations may be always implemented by the table lookup operation, for example, because no native implementation of the operation in the execution environment is available, e.g., an activation function.

Optionally, the optimization may involve a replacement operation in which a node is replaced by a first subgraph representing a first implementation, if it is determined that the node can be implemented by a table lookup operation; and in which the node is replaced by a second subgraph representing a second implementation otherwise. The replacement operation may be performed after it has been determined which nodes can be implemented by the table lookup operation, but before it is determined that such a node can be fused with further nodes. In particular, the nodes to be fused with may comprise one or more nodes from a second subgraph of another node, e.g., node(s) corresponding to a dequantization operation of a previous node or a quantization node of a following node. This way, the optimization may be combined with a transformation that converts a high-level computation graph into a low-level computation graph, as discussed in more detail elsewhere in this specification.

Optionally, the second implementation used by the replacement operation may be configured to quantize an input (e.g., a floating-point input) to integer; apply an integer operation corresponding to the node to get an integer output; and dequantize the integer output (e.g., to floating-point). For example, the input graph of the optimizer may allow different types of input for a particular operation (e.g. supporting both integer and floating-point inputs), where the replacement operation may lead to a graph where respective operations allow only respective types of input (e.g., an addition supporting only integer, with the replacement operation including a quantization if the preceding output is not an integer). Depending on the input and/or output supported by the node, nodes corresponding to the quantization and/or dequantization may be included in the subgraph.

Optionally, for a node having multiple inputs (e.g., multiple tensor inputs, in case the computation graph is a tensor computation graph), it may be determined that the node be implemented by a table lookup operation, based on determining that the multiple inputs have a common ancestor in the graph. For example, an (elementwise) addition of two (tensor) inputs that by themselves represent (elementwise) functions applied to a common predecessor edge, can itself be represented as an elementwise function applied to the common predecessor edge, and may thus be determined to be implementable by a table lookup operation. Since such determining is not feasible to do manually especially for large computations, and in particular is based on the structure of the computation graph, this is a particular example where it is beneficial to automatically determine whether nodes can be implemented as table lookups.

The computation graph may comprise one or more reshaping nodes. Such a reshaping node may represent an operation that reorganizes elements of one or more input tensors without changing their values, such as a transpose, a reshaping, a flattening, etc. In such a case, the computation graph may be reordered to fuse at least one operation preceding the reshaping node with at least one operation succeeding the reshaping node. For example, swapping the reshaping node with its preceding or succeeding node, may result in two adjacent nodes representing elementwise operations that can be implemented by a lookup table and that can then be fused into a single table lookup. When the optimization involves a replacement operation as described herein, the reordering is preferably performed after the replacement operation, but can also in principle also be applied before it.

Optionally, the transformed representation of the computer program does not comprise a table lookup operation being applied to an output of a further table lookup operation. Instead, such subsequent table lookups may be fused, resulting in a more efficient implementation of the computer program. Optionally, the transformed representation of the computer program does not comprise a reshaping operation being applied to an output of a table lookup operation. By swapping TLUs and reshapings whenever a reshaping is applied to the output of a TLU, it may be ensured that there are no TLUs that only have a reshaping between them, in other words, such TLUs are grouped together in the computation graph. This allows to fuse the TLUs e.g. by selecting them as a connected subcomponent of the graph.

Optionally, the computer program may represent the evaluation of a machine learnable model, such as an artificial neural network, a generalized linear model, a decision tree, or an ensemble model. Such types of computations can be well described by a (tensor) computation graph, can be relatively complex, and can be applied repeatedly on different data, making it important to optimize computer programs for their efficient evaluation.

Generally, the input computation graph may be defined in a format and/or using a set of supported operations that is independent of the particular execution environment. For example, the input computation graph may be a high-level graph defined e.g. in the ONNX (Open Neural Network Exchange) format. The transformed representation may be a low-level representation specific to the execution environment that is optimized for, e.g., it may be an executable format executable by the execution environment, or it may be a computation graph using a restricted set of nodes and/or edges supported by the execution environment. For example, a replacement operation may be used to implement high-level operations in terms of low-level operations. For example, the optimizer may be used in an encrypted computation system to allow a machine learning model, or other type of computation, that is specified according to the high-level representation, to be executed efficiently using homomorphic encryption.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a compiler system;
Fig. 2a shows an example of an encrypted computation system;
Fig. 2b shows an example of a device supporting a hardware lookup table;
Figs. 3a-3d show detailed examples of computation graphs;
Fig. 4 shows an example of how to optimize a computer program;
Figs. 5a-5c show detailed examples of transformed computation graphs;
Figs 6a-6b show detailed examples of reordering computation graphs;
Fig. 7 shows an example of how to optimize a computer program;
Fig. 8 shows a computer-implemented method;
Fig. 9 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

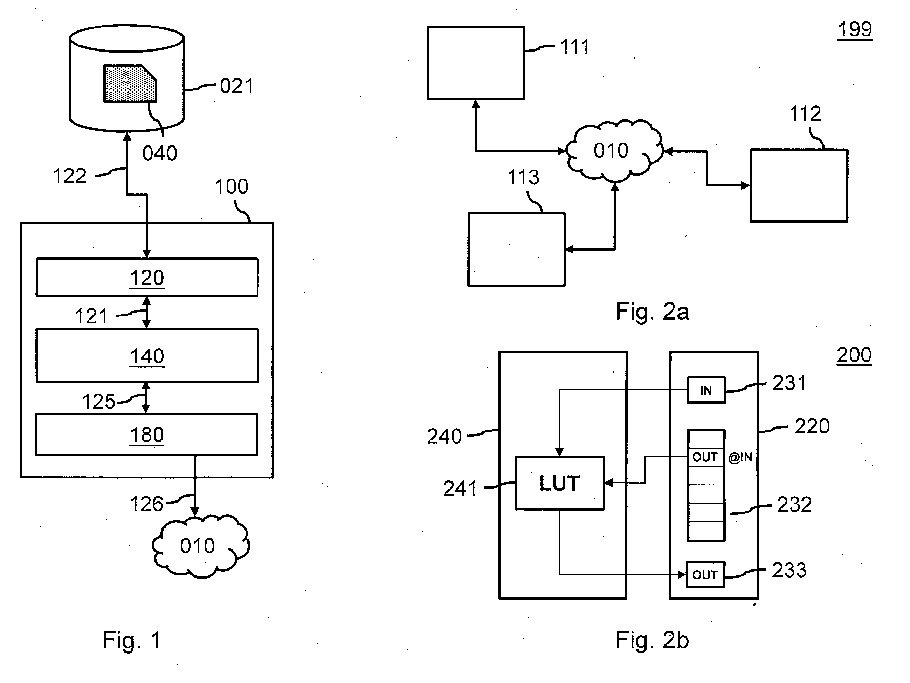

Fig. 1 shows a compiler system 100. The system 100 may be for optimizing a computer program for an execution environment that supports a table lookup operation, e.g., for a homomorphic encryption computation as exemplified in Fig. 2a or for a hardware implementation as exemplified in Fig. 2b.

The system 100 may comprise a data interface 120 for accessing data 040 representing the computer program as a computation graph. Respective nodes of the computation graph may represent respective operations. For example, the computation graph that is input may comprise at least 50, at least 250, or at least 10000 nodes.

For example, as also illustrated in Fig. 1, the data interface 120 may be constituted by a data storage interface 120 which may access the data 040 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 021 may be an internal data storage of the system 100, such as a hard drive or SSD, but also an external data storage, e.g., a networkaccessible data storage. In some embodiments, respective data may each be accessed from a different data storage, e.g., via a different subsystem of the data storage interface 120. Each subsystem may be of a type as is described above for data storage interface 120.

The system 100 may further comprise a processor subsystem 140 which may be configured to, during operation of the system 100, determine, for respective nodes of the computation graph, whether or not the respective node can be implemented by a table lookup operation. The processor subsystem 140 may be further configured to determine, for a node that can be implemented by a table lookup operation, that one or more further nodes of the computation graph can be fused into the table lookup operation. The processor subsystem 140 may be further configured to output a transformed representation of the computer program wherein the node and the one or more further nodes are fused into a single table lookup operation.

The system 100 may further comprise an output interface for outputting the transformed representation of the computer program. In this example, the output interface is constituted by a communication interface 180 via which the transformed representation 126 may be output to another system, e.g., a cryptographic device that performs an encrypted computation according to the output representation. Communication interface 180 may internally communicate with processor subsystem 140 via data communication 125. Communication interface 180 may be arranged for direct communication with the other system, e.g., using USB, IEEE 1394, or similar interfaces. As illustrated in the figure, communication interface 180 may also communicate over a computer network 010, for example, a wireless personal area network, an internet, an intranet, a LAN, a WLAN, etc. For instance, communication interface 180 may comprise a connector, e.g., a wireless connector, an Ethernet connector, a Wi-Fi, 4G or 4G antenna, a ZigBee chip, etc., as appropriate for the computer network. Communication interface 180 may also be an internal communication interface, e.g., a bus, an API, a storage interface, etc.

However, alternative ways of implementing the output interface are also possible. For example, the output interface may be constituted by the data interface 120, with said interface being in these embodiments an input/output ('IO') interface, via which the determined transformed representation may be stored in the data storage 021. In some embodiments, the output interface may be separate from the data storage interface 120, but may in general be of a type as described above for the data storage interface 120.

In general, each system described in this specification, including but not limited to the system 100 of Fig. 1, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a nonvolatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

**Fig. 2a** shows a detailed, yet non-limiting, example of an encrypted computation system 199. System 199 is configured for performing an encrypted computation using homomorphic encryption, e.g., fully homomorphic encryption.

The encrypted computation system 199 may comprise a cryptographic system 112 configured to perform the encrypted computation using homomorphic encryption. The encrypted computation system 199 may further comprise a compiler system 111 configured to determine a representation of a computer program optimized for the execution environment provided by the homomorphic encryption. Compiler system 111 may be based on system 100 of Fig. 1, for example. The encrypted computation system 199 may further comprise a data provider device 113. Respective systems 111, 112, 113 in this example may be based in general on the hardware configuration of device 100 of Fig. 1a, e.g., may comprise a processor system, data, and/or communication interfaces as in Fig. 1.

System 112 may be configured to receive encrypted data items from data provider 113. At least one or more data items may be received in encrypted form. One or more further data items may be received in plain format. System 112 may be configured to receive key material, e.g., bootstrapping and/or key switching keys, for performing the encrypted computation, e.g., from the data provider system or from key generation system.

System 112 may perform the encrypted computation on the received data items and possibly also on stored data items. Interestingly, the computation may be performed by the device on the encrypted data, without decrypting the data, e.g., without converting encrypted data items to data in a plain format. System 112 may perform the encrypted computation according to the transformed representation determined by the compiler system 111.

The compiler system 111 may be combined with the data provider system 113, in which case the data provider system 113 can for example provide the transformed representation of the computer program along with the data items to execute the computer program on. Or, the compiler system 111 may be combined with the cryptographic system 112, or invoked by the cryptographic system to perform the optimization, in which case the data provider system 113 can for example provide the computation graph to which the optimization is applied, along with the data items to execute the computer program on. For example, the computation graph may be in a format that is defined independently of the execution by encrypted computation, for example, in the ONNX format, and may not even have been constructed for use with homomorphic encryption. Still, due to the optimization, the computer program can be executed efficiently using homomorphic encryption, in particular with a reduced number of table lookup operations.

Although not shown in this figure, the encrypted computation system 199 may comprise multiple cryptographic systems, e.g., two, three or more than three. The encrypted computation may be distributed among the multiple cryptographic systems. The cryptographic systems may exchange intermediate computation results, typically encrypted, among each other. Each cryptographic device may be implemented as cryptographic system 112, and may perform encrypted operations as described herein.

Generally, various types of homomorphic encryption may be used that support an encrypted table lookup operation. In many cases, the homomorphic encryption has integer and/or polynomial plaintexts, defined modulo a certain modulus (with modular integers sometimes being equivalently described as torus elements in the literature via

the correspondence $\mathbb{Z}_q \cong ((1/q)\mathbb{Z})/\mathbb{Z}$ .

Apart from supporting the encrypted table lookup operation, the homomorphic encryption typically supports a set of further operations that do not involve the table lookup. Such operations may be referred to as native operations of the homomorphic encryption, and can for example include an addition operation and/or an encrypted scalar multiplication. Such operations are typically computationally more computationally efficient to perform than the table lookup. Accordingly, implementing these operations natively may generally be preferred over a table lookup if possible. Interestingly, however, in some cases these operations may still be fused into a preceding and/or succeeding lookup table operation as described herein, leading to an overall efficiency improvement.

In particular, the computation may use homomorphic lattice encryption, e.g., LWE encryption and/or NTRU encryption. It is known per se how to implement various operations, including an encrypted table lookup operation, for such encryptions. For example, the homomorphic encryption may be a "TFHE-like" homomorphic encryption in the sense that the table lookup operation is implemented as a so-called programmable bootstrapping operation. This operation may perform a table lookup for an input ciphertext based on a blind rotation. The blind rotation may perform a decryption of the input ciphertext in the exponent of a monomial. By multiplying the encrypted monomial by a polynomial representing the lookup table, an encrypted polynomial may be obtained having the output of the lookup table as a fixed coefficient. This polynomial coefficient may be extracted, or the encrypted polynomial may be further processed, for example. Such a TFHE-like programmable bootstrapping is known per se for LWE encryption, e.g., from I. Chillotti *et al.,* "Programmable bootstrapping enables efficient homomorphic inference of deep neural networks"' and from L. Ducas *et al.,* "FHEW: bootstrapping homomorphic encryption in less than a second", proceedings EUROCRYPT 2015; and also for NTRU encryption, e.g., from C. Bonte *et al.,* "FINAL: Faster FHE instantiated with NTRU and LWE", https://eprint.iacr.org/2022/074 and K Kluczniak, "NTRU-v-um: Secure Fully Homomorphic Encryption from NTRU with Small Modulus", https://eprint.iacr.org/2022/089.

The programmable bootstrapping (PBS) may take as input a ciphertext, and output a ciphertext of the same message, or a function of that message (in other words, a lookup table applied to that message), with input-independent noise. The PBS may comprise a blind rotation that evaluates the homomorphic decryption of the input ciphertext in the exponent of a polynomial. In particular, the programmable bootstrapping may take as input a ciphertext encrypting a message $m$; a bootstrapping key; and an encryption of a lookup table L. The programmable bootstrapping may output an encryption with a fixed level of noise encrypting the message *L[m].* Blind rotation is also known as accumulator update.

For example, encrypted computation system 199 may be configured to train machine-learning models, e.g., image classifiers, e.g., medical models, without the encrypted computing devices having access to the plain data items. a neural network may be trained. For example, back-propagation may be performed on the input data. The resulting model parameters may be returned to an entity who is in possession of the decryption key. This enables multiple providers of medical data to pool their data, by sending the data to a cloud provider. The cloud provider then returns the model parameters, without ever having access to the plain data. Encryption keys may be equal to decryption keys.

After the model is trained, the encrypted computation system 199 may be used to offer the model, say, for use with medical data. This can be done with plain model parameters or encrypted model parameters-in both cases with encrypted data, e.g., encrypted input, intermediate and output data. Using plain model parameters is usually much more efficient. In both cases, an effect of the system is that a computation is performed, say an image classification, e.g., a medical image classification, without the computer knowing the plain data items. For example, a mammogram may be evaluated for cancer, without the image ever being in the plain at a cryptographic system 112 and without any cryptographic system 112, or a coalition of such devices, knowing what the outcome of the cancer evaluation is. From a privacy point of view it may be acceptable to operate a plain model on encrypted privacy sensitive data, while it might not be acceptable to operate on plain privacy sensitive data.

Fig. 2b shows a detailed, yet non-limiting, example of a device 200 supporting a lookup table. In this case, the lookup table is implemented in hardware.

In particular, the figure shows a processor subsystem 240 in which a hardware lookup table LUT, 241 is implemented. The processor subsystem 240 can be as described for processor subsystem 140 of Fig. 1. In particular, the processor subsystem 240 may be implemented in programmable logic, e.g., as field-programmable gate array (FPGA). The processor subsystem 240 can also be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

As shown in the figure, the lookup table **LUT** may access an input **IN,** 231, and determine output **OUT,** 233 based on accessing data 232 storing the lookup table at a memory location corresponding to the input **IN.** The data 231-233 are shown here as being stored in a separate memory 240, e.g., corresponding to storage 021 of Fig. 1a. For example, the lookup table can be implemented through a slice of RAM (random access memory) or ROM (read only memory). Data 231-233 can also be accessed by lookup table **LUT** in different ways, e.g., as values of registers or via a bus.

As is illustrated in the figure, the output **OUT** may correspond directly to the data stored at the memory location indicated by the input **IN.** However, alternative implementations of the hardware lookup table are also possible. For example, instead of outputs, the data 232 may represent parameters of a function that is relatively efficient to compute. For example, according to a known technique, the high bits of the input value **IN** may be used to look up two values, which may then be interpolated using the low bits of the input **IN** to obtain the output **OUT.**

As a specific example, device 200 may be used to perform a neural network inference or training. For example, processor subsystem 240 may be a neural network accelerator, e.g., a specialised circuit that is optimized for the computation of the operations performed by the neural network.

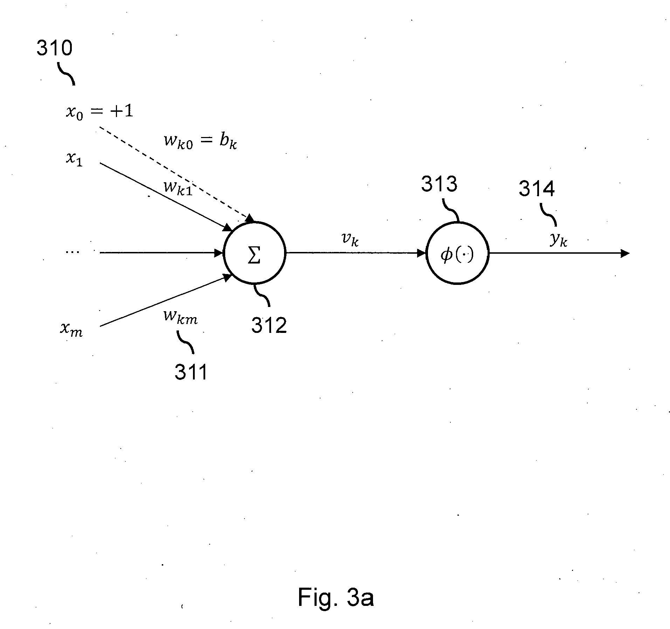

**Figs. 3a-3d** shows detailed examples of computation graphs that can be optimized using the techniques described herein. These examples illustrate the application of the invention to computer programs that represent the evaluation of a machine learnable model, in this example, an artificial neural network.

In particular, the computation graph of Fig. 3a shows an evaluation of a neuron of a neural network. As is known per se, neural networks may be used as statistical models that learn, using training data, to detect or generate patterns. Such a neural network may comprise multiple neurons, e.g., at least 1000 or at least 10000 neurons. A neuron may perform a weighted combination 312 of multiple inputs 310 according to respective weights 311, and may apply an activation function 313 to the result. The inputs 310 of the neuron can be the raw data or the activations of previous neurons, for example. In this example, the neuron combines $m - 1$ inputs with weights and with a bias $b_k$. (The figure shows a constant input $x_0 = +1$ corresponding to the bias $w_{k0} = bk$; nodes/edges for such a constant value are typically not considered to be part of the computation graph processed herein.)

Activation function 313 may be a univariate function, e.g., having a single variable input (but possibly using constants). Effectively, the activation function may decide if a neuron is activated, e.g., have a high output value 314, or not. Accordingly, it may effectively decide whether the neuron's input to the network is important or not in the process of prediction, e.g., using simpler mathematical operations. For example, an activation function may be a Rectified Linear Unit, a Sigmoid, or an Exponential Linear Unit.

Mathematically, the computation of a neuron of a neural network may be represented as follows:

$$y = \phi(\textstyle\sum_i w_i x_i + b) = \phi(s)$$

The dot product 312 between weights 311 and inputs 310 may also be referred to as the neuron accumulator s.

In a neural network, the neurons may be arranged in successive groups called layers. For example, a neural network may comprise at least 10 layers or at least 100 layers. For example, the neural network may comprise one or more convolutional layers and/or one or more dense layers (also referred to as linear layers). Regardless of the type of layer, its computation may involve the computation of the neuron accumulator

$$s = \textstyle\sum_i w_i x_i + b$$

where $w_i$, 311 are learned weights, $x_i$, 310 are inputs and $b$ are bias values. For example, in the case of a convolutional layer, $i = (c,y,x)$ may be a tuple of iterators over the number of channels, the height and width of the input tensor 310.

Apart from weighing 312 and activation functions 313, values of a neural network may undergo various other operations, such as: normalization, in particular, batch normalization; scaling; and/or non-linear operations, e.g., applied to output 314 before being used as input in a following neural network layer.

The example of Fig. 3a shows a scalar computation graph in which edges 310, 314 may represent scalar values,.and nodes 312, 313 may represent operations applied to the scalar values. In many other cases, however, the computation graph may be a tensor computation graph. In such a case, a node of the graph may represent an operation that is applied to one or more input tensors and results in an output tensor, corresponding to the incoming and outgoing edges of the node respectively.

Generally, a tensor X may represent a set of values $X_{i_1,i_2,\ldots,i_m}$ indexed by a set of $m$ indices, where m is also referred to as the dimension of the tensor. Scalar values can be represented by a tensor of dimension $m = 0$. Vectors can be represented by a tensor of dimension m = 1. Matrices can be represented by a tensor of dimension $m = 2$. A tensor computation graph may be defined as having at least one edge that represents a tensor of dimension m > 0. For example, the tensor computation graph may comprise one or more edges representing tensors of dimension at least two, and/or one or more edges representing tensors of dimension at least three. The inputs and outputs of a neural network layer can for example be represented as a 2-dimensional tensor (for 1D data with a number of channels); as a 3-dimensional tensor (for 2D data with a number of channels), or as a 4-dimensional tensor (for 3D data with a number of channels).

A tensor computation graph may represent a sequence of operations that are performed on data stored in tensors. Tensors are generalization of matrices of numbers to more than 2 dimensions. In various embodiments, tensor computation graphs may be considered that are directed and acyclic. Generally, a tensor operation graphs may represent an ordered set of operations that are performed over tensors. Operations can have inputs that are computed by other operations or may be inputs of the overall computer program. Operations can also involve constants. For the purpose of this specification, the inputs to an operation mean the non-constant inputs.

For example, a tensor computation graph described herein may represent an evaluation of a neural network. However, as is known per se, tensor computation graphs can also be used for other types of computations, for example in stream processing systems, or in databases.

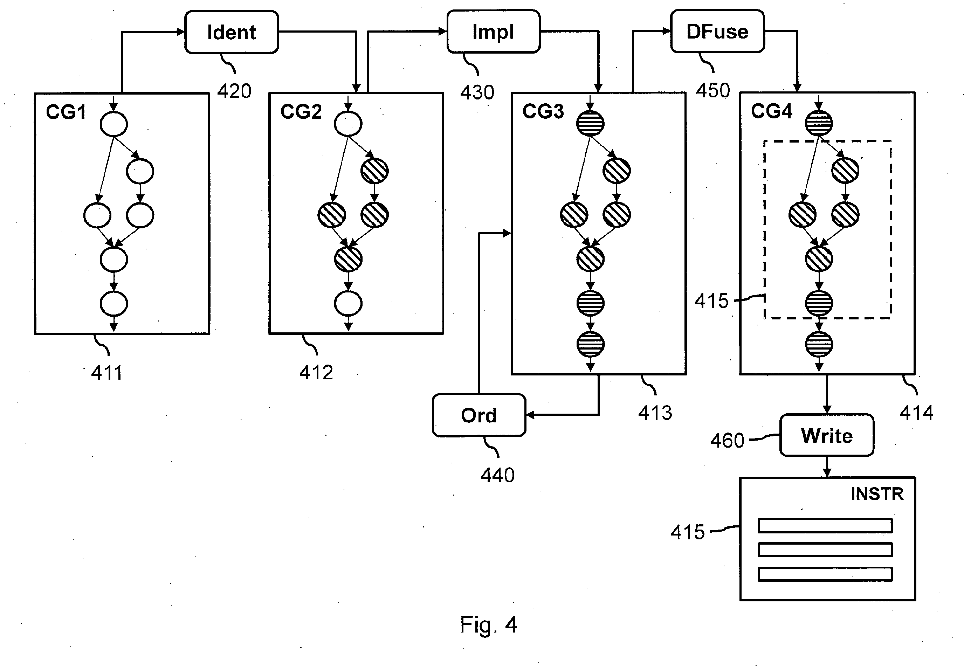

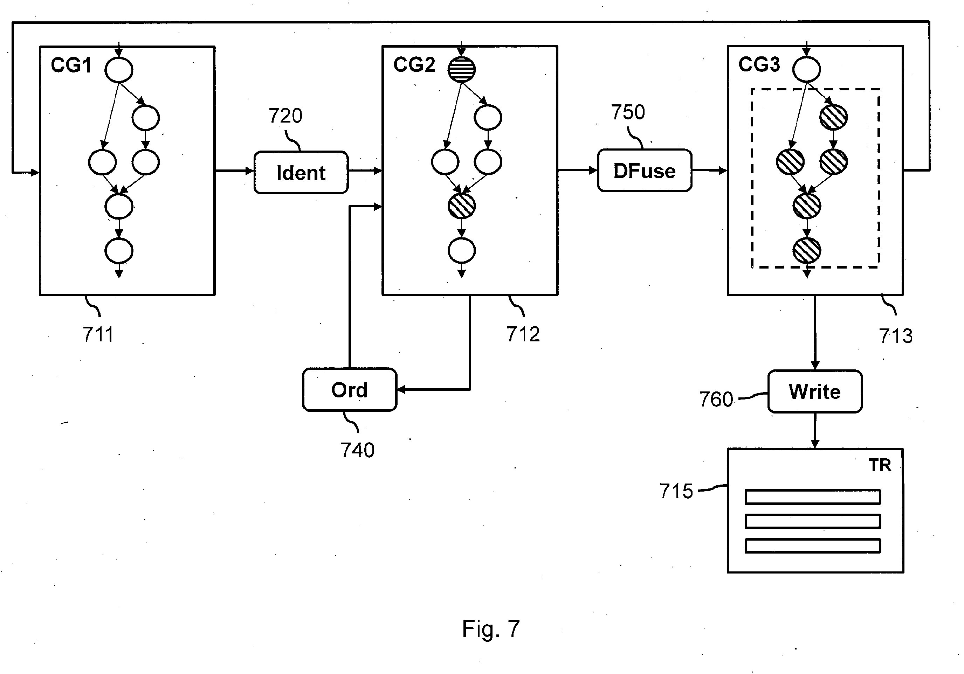

Generally, a computation graph can represent a computation at various levels of abstraction. For example, an activation function may be represented in a computation graph as a single node in the graph, which may then be implemented in code as a sequence of elementary tensor operations; or as a sequence of more elementary tensor computation graph operations such as 'Add', 'Subtract', etc. The provided techniques can in principle be applied to graphs at various levels of abstraction, as is further discussed with respect to Figs. 4 and 7. As a specific example, the provided techniques may be applied to graphs in the ONNX (Open Neural Network Exchange) format. This is a format for tensor computation graphs that use a given set of operators.

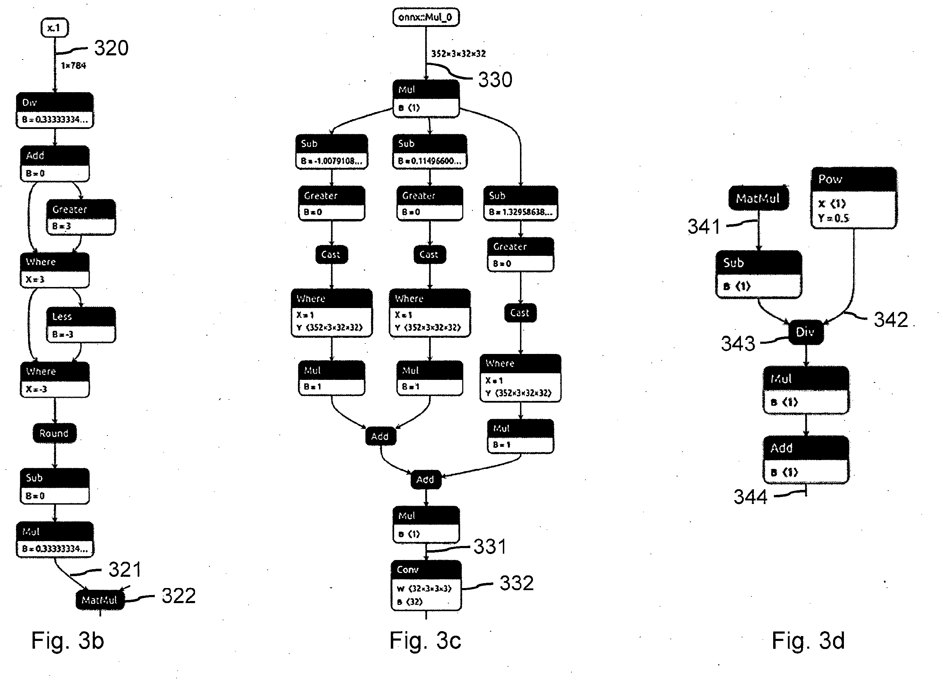

For example, **Figs. 3b-3d** show tensor computation graphs representing computer programs that may be used as part of a neural network evaluation. These figures provide visual representations of tensor computation graphs specified in the ONNX format. As illustrated in these figures, a node of a tensor computation graph may represent an elementary operations such as an arithmetic operations like addition (Add) and subtraction (Sub); a division (Div); a multiplication (Mul); a convolution (Conv); or a matrix multiplication (MatMul). In the computation graphs, non-constant inputs of the operations are represented as incoming edges while constant inputs are incorporated in the operation node itself.

In particular, **Figs. 3b and 3c** show computation graphs representing quantization computations. Quantization computations may be used for neural network evaluation. Neural networks may typically represent values, such as inputs, activations and/or weights as floating-point values. In various cases, however, neural network operations may be applied to integer values. This can be the case for computational performance reasons, or to evaluate the neural network under encryption, for example.

A quantization computation may convert floating-point values to integer. Floating-point numbers may have a fine resolution for representing real numbers, with a limited number of bits. Moreover, the resolution of floating-point numbers may be inversely proportional to the absolute value of the number. When quantizing neural networks to use integers to improve computation performance, the number of bits of these integers may be low, e.g., at most 12 bits, at most 8 bits, or at most 6 bits. Various quantization techniques exist that aim to perform quantization with a minimal quantization error.

For example, a subgraph of a computation graph may represent a uniform quantization. In uniform quantization, discrete values may be assigned to equally-sized intervals of the real axis. This is illustrated by Fig. 3b, where, in this example, the uniform quantization is applied elementwise to an input tensor 320 and results in an output tensor 321 that is input to a matrix multiplication operation 322, e.g., of a linear layer of a neural network. In particular, the computation performed in the shown computation may be represented mathematically as follows:

$$x_q = round\left(clip\left((x_f - min_{x_f})\underbrace{\frac{2^n-1}{max_{x_f}-min_{x_f}}}_{q_x}, min_{x_f}, max_{x_f}\right)\right)$$

$$= round\left(\frac{x_f}{s_x} - \underbrace{min_{x_f}q_x}_{zp_x}\right) = round\left(\frac{x_f}{s_x} - zp_x\right).$$

where $q_x$ is a scale factor, $zp_x$ is a zero-point, and $min_{x_f}$ and $max_{x_f}$ are limit values limiting the range of reals that are quantized to integer values. For example, the values of these parameters may be obtained by computing them from a representative set of data.

The illustrated uniform quantization may be undone by performing an inverse quantization computation (not shown in the figure). Thereby, quantized floating point values may be retrieved that approximate the initial raw values. Inverse uniform quantization may be denoted mathematically as:

$$x_{f'} = (x_q - zp_x) * s_f.$$

**Fig.** 3c shows a computation graph of a non-uniform quantization computation. In non-uniform quantizations, respective intervals that are mapped to respective integers, do not all have the same size. Mathematically, non-uniform quantization may correspond to a computation

$$x_q = \sum_{i=0}^{2^n-1} step(x_f - \beta_i),$$

where

$$step(x) = \begin{pmatrix}0, & \text{if } x < 0 \\ 1, & \text{otherwise}\end{pmatrix}$$

and $\beta_i$ are the end values of each interval. Here, the first interval is $[-\infty, \beta_0]$, the second is $[\beta_0, \beta_1]$, and the last one is $[\beta_2 n_{-1}, \infty]$.

In the example shown, non-uniform quantization is applied to a tensor 330 of integers of n = 2 bits. The output 331 of the quantization is in this example input to a Convolution (Conv) operation 332, e.g., corresponding to convolutional layer of a neural network. The $\beta_i$ values above correspond to the values in the Sub nodes in the graph.

**Fig.** 3d shows a computation graph of a normalization computation. The example illustrates batch normalization in the 2D case. This computation can be represented mathematically as follows:

$$y_c = \frac{x_c - \mu_c}{\sigma_c}\beta_c + \gamma_c \forall c \in [0, NumberOfChannels]$$

where y is the output tensor 344, $x$ is the input tensor 341, $\beta$ and y are learned parameters, and $\mu_c$ and $\sigma_c$ are the mean and standard deviation for channel c, e.g., obtained by computing them over a representative set of input tensors.

In this example batch normalization is performed on the output 341 of a Matrix Multiplication (MatMul) layer. Div operation 343 in this example represents the division between the centred input x - $\mu$ and the standard deviation 342, expressed here as the square root of the variance: $\sigma = Var^{0.5}$. Although being shown in this example as being an edge representing a variable input of the division 342, the standard deviation 342 may more typically be a constant that is incorporated into the division 342 and so may not be represented as an edge in the computation graph.

Instead of or in addition to batch normalization, a computer program as described herein can also include a tensor normalization (e.g., using a single $\mu$ and $\sigma$ per tensor), a layer normalization, a scaling to 0-1, etc.

**Fig. 4** shows a detailed, yet non-limiting, example of optimizing a computer program. In this example, the optimization involves an implementation operation (also referred to as a replacement operation) that transforms a high-level computation graph into a low-level computation graph. In this example, nodes of the high-level graph are determined to be implementable by a table lookup or not; the implementation operation is based on this determination; and nodes of the low-level graph are fused into a single table lookup operation.

In particular, shown in the figure is a computation graph **CG1,** 411 representing the computer program to be optimized, e.g., as discussed with respect to Figs. 3a-3d. Respective nodes of the computation graph represent respective operations. In particular, the computation graph **GC1** may be a tensor computation graph, in which a respective operation is applied to one or more input tensors and results in an output tensor. For example, the computation graph **CG1** may be represented in the ONNX format, e.g., as a directed acyclic graph of tensor operations from the ONNX referential (available at https://github.com/onnx/onnx/blob/55d3b80f3ea1261f3f74f2e35844c204de85835a/docs/Ope rators.md and incorporated herein by reference).

Various operations may be supported by the optimization. In particular, the overall set of operations may include at least an addition operation, a multiplication by a constant, and a multiplication between two non-constants. The overall set of operations may also include at least one non-linear elementwise operation, such as an activation function application, a numerical comparison, and so on. Generally, several sets of operations may be distinguished that can occur in the tensor computational graph **CG1.** Nodes representing operations from a first set may be never implemented by a table lookup operation; nodes representing operations from a second set may be implemented by a table lookup operation depending on the computation graph at hand; and nodes representing operations from a third set may always be implemented by a table lookup operation. In particular, based on the kind of operation and the inputs of the operation, a node may be identified to be of a certain type. It is noted that a node representing a certain operation (e.g. addition) can be of different types depending on its context in the graph, e.g., depending on its input, as discussed in more detail below. In particular, the following types may be defined.

A first type of operation is a mixing operation (**MIX**). A mixing operation may be defined as an operation that modifies the values of its input tensors but is not applied elementwise to its inputs. In particular, a mixing operation may combine different values from a single input tensor of the operation, optionally by involving additional constant tensors. For example, the operation may be a neuron accumulator operation, such as a convolution or a matrix multiplication with a constant tensor (e.g., used to implement a dense neural network layer). Or, a mixing operation may combine values from two distinct graph input tensors or from tensors produced by different **MIX** operations. For example, the operation may be an addition or concatenation of two graph inputs, or may be an arithmetic or concatenation operation that is applied to tensors that are outputs of two **MIX** operations. In various embodiments, nodes determined to represent mixing operations are not implemented by a table lookup operation (although table lookup operations may be used to pre- and postprocess inputs and outputs of the operation, e.g., by quantization). For example, a given set of operations, e.g., convolution or dot product, may be determined to be of **MIX** type regardless of other nodes of the computation graph and may accordingly not be implemented by a table lookup.

A second type of operation is a univariate operation (**UNI**). A univariate function may be applied elementwise to its input tensor, returning an output tensor of the same size (but possibly with differently value types). For example, the operation can be an activation, a normalization, a quantization, or an arithmetic operations with a scalar constant. Note that univariate computation applied to a tensor is univariate with respect to a tensor cell (scalar). In particular, different functions may be applied to different cells in the tensor. Nodes determined to be univariate operations may be implemented by a table lookup operation. In particular, as illustrated below, a node may be determined to be of UNI type despite having multiple incoming edges in the computation graph.

Interestingly, there may be a set of operations for which nodes may be determined to be **MIX** or **UNI** type operations, depending at least on their inputs. This set of operations may include addition (Add) and/or multiplication (Mul), for example. For example, when the input types of such an operation are **UNI,** then the operation itself may also be determined to be **UNI,** depends on the operation. For example, an Add operation can be **UNI,** e.g., if one of the inputs is produced by a univariate operation and the other input is a constant, or if the inputs are produced by UNI operations working on the same single input. An Add operation can be **MIX,** for example, if the inputs are produced by UNI operations on different inputs. As a consequence, operations from this set may be implemented by a table lookup or not, depending on other nodes of the graph. In particular, an operation may be determined to be a **MIX** or **UNI** operation depending on a preceding operation, e.g., an addition x + 1 may be determined to be a **UNI** operation if the preceding operation is a **UNI** operation, e.g., a sigmoid(x), and it may be determined to be a **MIX** operation if the preceding operation is a **MIX** operation, e.g., conv(x, w). In some embodiments, for simplicity, addition by constant is always determined to be a UNI operation.

For various univariate operations, it can be the case that no native implementation is available in the execution environment and that they are always determined to be of **UNI** type and accordingly implemented by a lookup table. For example, depending on the execution environment, this can be the case for a non-linear function such as an activation function, a sine function, etc.

A third type of operation is a reshaping operation **(SHAPE).** Such an operation may reorganize the elements of one or more input tensors, e.g., by reordering the values or changing the tensor metadata such as the shape. The values in the tensors may remain unmodified. Examples of such operations can include a transpose, reshaping, flattening, etc. Since such an operation may not affect the values, it is also typically not implemented using a lookup table.

An identification operation **Ident,** 420, may be applied to the computation graph **CG1** to determine, for respective nodes of the computation graph **CG1**, whether or not the respective node can be implemented by a table lookup operation, in particular by determining whether or not the node is of **UNI** type as discussed above. This may lead to an updated computation graph **CG2,** 412, wherein respective nodes are flagged as either being implementable by the table lookup, or not. Such a flag is also referred to as a mode of execution, or as a CanFuse flag. A node that is implementable by the table lookup may be said to have the TLU (table lookup) mode of execution.

Generally speaking, the identification **Ident** may process tensor operation graph **CG1** and may determine the mode of execution for its respective operations, by (a) iterating over the operation graph **CG1,** which can generally be performed in any order and however many times necessary; (b) evaluating certain compatibility conditions for respective each operation, to establish if the TLU mode of execution can be used for the operation; and (c) assigning the mode of execution to the respective operations of the graph. This is illustrated in the figure by several nodes of the result **CG2** of the identification being diagonally striped to indicate that they have the TLU mode of execution.

Interestingly, the identification may involve, for a node of the graph **CG1** that has multiple inputs, that it can be implemented by a table lookup operation. Namely, it may be determined that the multiple inputs have a common ancestor from which the output of the node may be computed as an elementwise function. This makes it possible to fuse this node with the preceding nodes, and possibly also with succeeding nodes, into a single table lookup, leading to an overall more efficient execution in the execution environment.

As a detailed example, an example is now provided of an algorithm to determine which operations can be fused, Namely, for operations at respective indices $i$ in the operation graph, the algorithm may set *CanFuse[i]* to the corresponding the mode of execution: either in a TLU (e.g., a **UNI**-type operation), or as an elementary operation (e.g. a **SHAPE** or **MIX** type operation). As illustrated, for one or more nodes, it may be determined that they are of **MIX** or **SHAPE** type regardless of their position in the graph (e.g., a convolution operation or a flattening operation), in other words, they may have a preimposed operation type. For one or more other nodes, the operation type, or in this example the resulting CanFuse flag, may be determined based on their position in the graph.

---

**Algorithm.** Determining whether an operation can fuse

**Data:** $OpGraph$ : A tensor computation operation graph, sorted in topological order

---

$P \leftarrow \emptyset$;

$CanFuse \leftarrow \emptyset$;

**foreach** $InputTensor$ **in** $GetInputs(OpGraph)$ **do**

    $P[InputTensor] \leftarrow \{InputTensor\}$

**end**

**for** $i \leftarrow 0$ **to** $Length(OpGraph)$ **do**

    $NodeInputs \leftarrow \emptyset$

    **foreach** $InputTensor$ **in** $GetOpInputs(Op)$ **do**

$$NodeInputs \leftarrow NodeInputs \cup P[InputTensor]$$

```
        end

        T ← OperationType(Op)

        if T is MIX or T is SHAPE then              // pre-imposed operation type

                CanFuse[i] ← False

        else

                if Card(NodeInputs) == 1 then

                        CanFuse[i] ← True           // operation is of UNI type

                else

                        CanFuse[i] ← False          // operation is of MIX type

                end

        end

        if CanFuse then

                P[OpGraph[i]] ← NodeInputs

        else

                P[OpGraph[i]] ← {OpGraph[i]}

        end

end
```

Following the identification operation **Ident,** an implementation operation **Impl,** 430, may be applied to the computation graph **CG2.** The implementation operation may replace a node of the computation graph **CG2** by a first subgraph representing a first implementation if the node has been flagged as being implementable by a table lookup operation; and by a second subgraph representing a second and different implementation otherwise, resulting in an updated computation graph **CG3.** In that sense, a high-level computation graph CG2 may be turned into a low-level computation graph **CG3.**

In particular, the high-level computation graph **CG2** may comprise one or more operations that are not directly executable by the execution environment; for example, operations on floating-point values. Implementation **Impl** may transform the high-level computation graph into a low-level computation graph CG3 that may comprise only elementary operations, e.g., operations that are directly executable by the execution environment; for example, such elementary operations can be lookup table-compatible operations (on integers and/or floating points) and primitive operations on integers (although such operations may still be implemented by multiple primitive operations of the execution environment: e.g., a matrix multiplication, a convolution, or the like, may be executed by performing multiple multiplications of integers).

Generally, the respective implementations that are available for an operation may be respective sub-programs, represented as subgraphs by which the node of the operation can be substituted. At least one of these sub-programs may be used to construct a TLU. An implementation can for example represent a sequence of elementary operations (addition, subtraction, etc.).

In particular, the first implementation may be a floating-point subprogram. Such a floating-point subprogram may be represented by a single node having floating point input and output tensors. As an algorithm, the first implementation may be represented as:

---

**Algorithm.** Arithmetic operation Implementation 1: floating point computation

**Data:**     $A$ : An input tensor (non-constant)

**Data:**     $B$ : A constant tensor

---

**return** A $\oplus$ B

---

The second implementation may represent a sequence of sub-programs in floating point and/or integer. In particular, this implementation may be configured to quantize an input to integer (if needed); apply an integer operation corresponding to the node to get an integer output; and dequantize the integer output (if needed). For example, for an arithmetic operation $\oplus$, this implementation may correspond to the following algorithm:

---

**Algorithm.** Arithmetic operation Implementation 2: integer computation

**Data:**     $A, B$ : Input tensors

---

A' $\leftarrow$ Preamble(A)

Aint $\leftarrow$ Cast(A', integer)

B' $\leftarrow$ Preamble(B)

Bint $\leftarrow$ Cast(B', integer)

// Here $\oplus$ can be one of $+, -, \times, /$ (addition, subtraction, multiplication, division). However, this

// pattern can be extended to other operations such as comparison ($<, >, \leq$, etc), rounding $\lfloor x \rfloor$

C $\leftarrow$ Aint $\oplus$ Bint

C' $\leftarrow$ Cast(C, float)

**return** PreProcess(C')

---

More generally, an operation of the computation graph CG2 may be implemented in the transformed computation graph **CG3** as follows:

---

**Algorithm.** Tensor computation graph Operation implementation

**Data** $Op, i$ : An operation in a tensor computation graph at index $i$ in the operation graph $OpGraph$

**Data** $CanFuse$: A vector that contains, for each operation at index $i$ in the tensor computation graph $OpGraph$, a boolean value indicating if the operation can be fused

---

**if** $CanFuse[i]$ **then**

    Execute implementation 1 of $Op$ in floating point

**else**

    Execute floating point preamble, e.g., quantization such as uniform quantization

    Cast the input tensors to integer

    Execute implementation 2 for $Op$

    Cast the results of $Op$ to floating point

    Execute floating point postprocessing, e.g., inverse of the quantization

**end**

---

In particular, the second implementation may perform an integer operation corresponding to the operation to be implemented. For example, a matrix multiplication may be performed on quantized values as discussed e.g. in B. Jacob et al., "Quantization and training of neural networks for efficient integer-arithmetic-only inference", doi:10.1109/CVPR.2018.00286 (incorporated herein by reference).

In particular, as shown in the figure, in the transformed computation graph **CG3,** the nodes that were identified **Ident** as being fusable may be replaced by corresponding floating point operation nodes (illustrated as being the same as the original nodes in computation graph CG2), while the nodes that were identified **Ident** not to be fusable may be replaced by corresponding subgraphs for their integer implementations (illustrated as resulting in horizontally striped nodes).

After implementation operation **Impl,** a fusing determining operation **DFuse,** 450, may be applied in which it is determined, for a node that is implementable by the table lookup operation, that one or more further nodes of the computation graph **CG3** can be fused into this table lookup operation. This is illustrated in the figure as computation graph **CG4,** 414, for which it is determined that the nodes 415 can be fused into a single table lookup operation. Accordingly, the figure illustrates a distinct identification step **Ident,** in which nodes are identified as being fusable or not; and fusing determining step **DFuse,** in which it is such nodes are grouped into subsets, e.g., set 415, of nodes that are fused.

In particular, fusing determining step **DFuse** may identify a connected component of the computation graph **CG3** that share the common property that they are implementable by a table lookup operation, e.g., can be described as an application of a univariate function to an output of a preceding node. Interestingly, at this stage it may suffice to just identify connected components that satisfy this property; it may not be needed anymore at this point to check whether they have a common ancestor.

As illustrated in the figure, it is possible for fusing determining step **DFuse** to include nodes in the fusing step that do not correspond to fusable operations of the computation graph **CG2.** In particular, they may originate from implementations of non-fusable nodes. For example, as illustrated in the figure, a quantization operation originating from a subsequent non-fusable node of the computation graph CG2 may be fused with a fusable operation of the computation graph **CG2** into a single lookup table.

Interestingly, fusing determining step **DFuse** may be performed in such a way that a table lookup operation is not applied to an output of a further table lookup operation. In this respect, the number of table lookups that are performed may be minimized.

Having determined that nodes can be fused, an output writing operation **Write,** 460, may be performed, in which a transformed representation of the computer program may be output in which the nodes 415 are fused into a single table lookup operation. The transformed representation can take on various forms. It can be stored explicitly as a computation graph, but also as a set of instructions **INSTR,** 415, for the target execution environment that implicitly define the computation graph. The set of instructions may be in the form of instructions that are portable between multiple machine architectures, or in the form of code executable on a specific machine architecture. As is known per se, the writing operation **Write** may comprise constructing the lookup table by applying the univariate function represented by the nodes to be fused to a set of possible (e.g. integer) inputs to obtain the corresponding (e.g. integer) outputs. Such a writing operation is known for example from Zama's Concrete-Numpy, available at https://github.com/zama-ai/concrete-numpy.

The computation graph that is explicitly or implicitly defined by the writing operation **Write,** may be in a certain canonical form. The computation graph may be an integer computation graph, and may make use of table lookup operations. A table lookup (TLU) operation is applied elementwise to a single input tensor and may be defined as

$$TLU(x, LUT) = LUT_x, x \in \mathbb{N}$$

where *LUT* is a vector of M values, $LUT_i$ is the i-th element of the vector and $0 < x < M$. This operation is also known under the name of *Gather.* As is known per se, such a TLU operation may be constructed in writing operation **Write** from

(a) a sequence of elementary operations of computation graph **CG4** that together implement a uni-variate function, e.g., for $f(x) = sin(x/10)$, the sequence of operations is is $y = x/10$ followed by $sin(y)$

(b) a set of integers $\mathbb{I} \cup \mathbb{Z}$ that are representative values that will be processed by the TLU, allowing the computation of the function for integer value $v_i$ in the input set: $LUT_i = f(v_i), \forall v_i \in \mathbb{I}$.

The canonical form may be referred to as the Form TLU-Shape canonical form. This canonical form may refer to an integer (typically, tensor) computation operation graph having the following properties:

1. the operation graph only contains operations of the types **MIX, SHAPE** and **TLU;**

2. the **TLU** operations have integer inputs and outputs, e.g., $LUT_i \in \mathbb{N}$, $\forall i$;

3. the output of a **MIX** or **SHAPE** type operation is processed by at most one **TLU** operation before becoming the input of a following MIX or SHAPE type operation, or is returned as the final computation output.

In particular, the figure illustrates the case where the writing operation **Write,** 460 produces a set of instructions **INSTR,** 415, for the targeted execution environment based on the computation graph **CG4.** In this set of instructions **INSTR,** nodes 415 are fused into a single table lookup operation, in other words, a single table lookup operation is used to implement the set of nodes. The set of instructions can take on various forms, e.g., it may be assembly; a set of instructions executable by a homomorphic computation engine; a circuit layout of a hardware circuit; programming language code for a compiled or interpreted programming language, etc.

Optionally, the optimization may comprise an ordering operation **Ord,** 440. As illustrated in this figure, the ordering operation **Ord** may be applied to the low-level computation graph **CG3** obtained from implementation operation **Impl.** It is also possible to apply the operation to the high-level computation graph **CG2** prior to performing the implementation operation **Impl** (but typically after identifying **Ident** which nodes can be implemented by a table lookup operation); but applying the ordering operation to the low-level computation graph has the advantage that it is possible to identify more cases where a reordering can be applied.

The ordering operation **Ord** may operate on a reshaping **(SHAPE)** node. Such a node may represent an operation that reorganizes elements of one or more input tensors without changing their values, such as a transpose of a flattening. The ordering operation may reorder the computation graph, e.g., graph **CG3,** to fuse to fuse at least one operation preceding the reshaping node with at least one operation succeeding the reshaping node. Interestingly, such a reorganization may not affect the outcome of the computation represented by the computation graph **CG3.** But, the reorganizing may have the effect that the preceding and succeeding nodes are directly connected to each other in the graph, and that the fusing determining step **DFuse** can thus determine that these nodes can be fused into a single table lookup operation (possibly with further nodes).

In particular, after the ordering operation **Ord,** the computation graph **CG3** may have the property that no reshaping operation is applied to an output of a table lookup operation. This may be achieved by moving the reshaping operation after the table lookup operation. In particular, a sequence of nodes in the graph comprising a mixing operation, followed by one or more sequences of a table lookup followed by a reshaping, optionally followed by a table lookup, may be replaced by the mixing operation, the respective reshapings, and the respective table lookups. The respective table lookups may then be fused, by fusing determining step **DFuse,** into a single table lookup operation (possibly together with additional subsequent table lookups).

In particular, the ordering operation **Ord** may identify patterns **MIX** - **(TLU** - **SHAPE**)+ {- **TLU**}, where + denotes at least 1 repetition and {x} denotes an optional operation. The operation may replace such patters with new ones of the type **SHAPE**+ - **TLU**+ {- **TLU**}, allowing adjacent **TLU** operations to be fused by the **DFuse** operation.

In particular, the computation graph that is explicitly or implicitly defined by writing operation **Write,** may be in a canonical form that is referred to herein as the TLU-only canonical form. A computation graph in this canonical form may be an integer (typically, tensor) computation graph as having the following properties in addition to those of the TLU-shape form described elsewhere:

1. between a **MIX** and **SHAPE** operation, or between two **SHAPE** operations, there is no **TLU** operation;
2. a **TLU** operation cannot perform an identity mapping between inputs and outputs.

An example implementation of the ordering operation **Ord** is as follows:

---

**Algorithm.** SHAPE - TLU pattern simplification

---

**for** $i \leftarrow 0$ **to** $Length(OpGraph)$ **do**

     $T \leftarrow OperationType(Op)$

     **if** $T$ is SHAPE **then**

         $PrevOp \leftarrow GetPreviousOperation(i)$

         **if** $OperationType(PrevOp) == TLU$ then

             $MixOp \leftarrow FindPreviousOperationOfType(Op, MIX)$

             **if** $MixOp$ is not None **then**

                 $OpGraph \leftarrow InsertOperationAfter(MixOp, Op)$

             $NextOp \leftarrow GetNextOperation(i)$

             **if** $OperationType(NextOp) == TLU$ **then**

                 $NewTLU \leftarrow MergeTLUSubgraphs(PrevOp, NextOp)$

                 $OpGraph \leftarrow RemoveOperation(NextOp)$

             **else**

                 $NewTLU \leftarrow PrevOp$

             **end**

             $OpGraph \leftarrow InsertOperationAfter(Op, NewTLU)$

         **end**

         **end**

     **end**

**end**

---

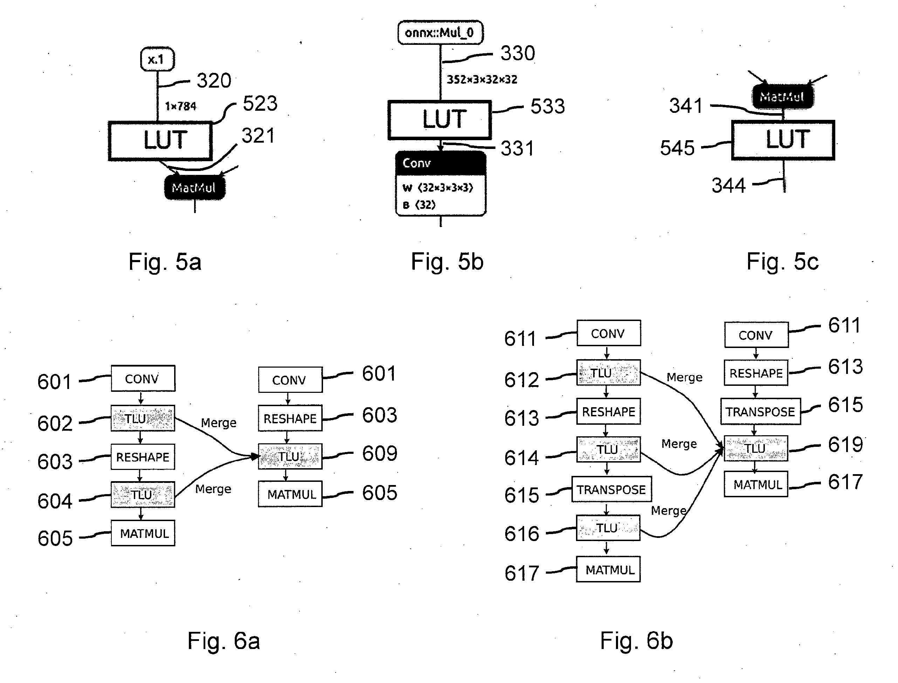

**Figs. 5a-5c** show detailed examples of transformed computation graphs. The shown transformed computation graphs may correspond to the output of an optimization as described herein.

These transformed computation graphs show lookup tables that are used to implement quantization (in Figs. 5a and 5b) and normalization (in Fig. 5b). Quantization and normalization, but also the application of an activation function, are examples of operations in neural networks that operate on individual activations, e.g., individual neuron outputs. Thus, these functions are uni-variate with respect to activations and can accordingly be implemented by a lookup table. Figs. 5a-5c show computation graphs determined according to the techniques described herein, in which these operations are implemented by a single lookup table. In particular, the subgraphs are in the TLU-SHAPE canonical form, as also discussed with respect to Fig. 4.

In particular, Fig. 5a shows a transformed representation of a quantization, in this case, a uniform quantization. This output can result from applying the techniques provided herein to the computation graph of Fig. 3b. The figure shows that the part of the computation graph of Fig. 3b that computes edge 321 from edge 320, is implemented in Fig. 5a as a single lookup table. It is noted that the graph of Fig. 3b contains several nodes with multiple inputs, in particular the two "Where" nodes; still, because it can be determined that these nodes have a common ancestor (in particular, the earlier "Add" or "Where" node), interestingly, these nodes are implemented by the lookup table 523 in Fig. 5a.

Similarly, Fig. 5b shows a transformed representation of a non-uniform quantization, resulting from the application of the provided techniques to the computation graph of Fig. 3c. In this example, the part of the computation graph of Fig. 3c that computes edge 331 from edge 330, is implemented as a lookup table 533. Also in this case, various nodes that per se have multiple inputs, are included in the lookup table, which is determined to be possible because the nodes share a common ancestor, namely, they are all computable as univariate functions of output 330 of a multiplication operation.

Fig. 5c finally shows a transformed representation of a normalization operation, in this case a batch normalization operation, obtainable by applying the provided techniques to the computation graph of Fig. 3d (where, as also discussed with respect to this figure, edge 342 is incorporated into Div node 343 as a constant input). In this case, the batch normalization of Fig. 3d that is applied to the output 341 of a matrix multiplication and results in an output edge 344, is implemented as a single lookup table 545.

**Figs. 6a, 6b** show detailed examples of reordering computation graphs. This examples show how a subgraph of a computation graph can be re-ordered to facilitate the fusing of table lookup operations. In particular, the reordering may be applied to a reshaping node. Such a node may reorganize elements of input tensor(s) without changing their values. If such a node (or a sequence of multiple such nodes) nodes is preceded and succeeded by table lookup operations, then by moving the reshaping node, the table lookup nodes may become directly connected in the subgraph and may (e.g., in a subsequent operation) be merged into a single table lookup operation.

Figures 6a, 6b show input computation graphs, as well as output computation graphs to which a "Merge", e.g., a reordering and subsequent fusing, has been applied.

In particular, Fig. 6a shows a computation graph that represents respective application to a tensor of a convolution CONV, 601; a table lookup TLU, 602; a reshaping RESHAPE, 603; a further table lookup TLU, 604; and a matrix multiplication MATMUL, 605. For simplicity, any further operands of the convolution 601 and matrix multiplication 605 are not shown in this example. In this example, reshaping operation 603 is preceded and succeeded by table lookups 602, 604, respectively. The reordering may comprise moving the reshaping operation 603 to before the table lookups 602, 604. The adjacent table lookups may then be fused into a single table lookup 609. It is also possible to move the reshaping operation to after the table lookups 602, 604 and accordingly obtain a computation graph where the single table lookup 609 precedes the reshaping 603. In any case, by iteratively moving reshapings before or after table lookups, sequences of table lookups to be fused can be obtained. Operations 601, 605 that are neither applied elementwise to their inputs nor represent reshapings, may be unaffected by the transform.

Similarly, Fig. 6b shows a computation graph in which a sequence of operations is applied to a tensor, being a convolution CONV, 611; a first table lookup TLU, 612; a reshaping RESHAPE, 613; a second table lookup TLU, 614; a reshaping operation in the form of a transpose TRANSPOSE, 615; a third table lookup TLU, 616; and a matrix multiplication MATMUL, 617 (any further operands of operations 611, 617 not shown for simplicity). In this case, the described transformation may be applied twice: once, to swap the order of the table lookup 612 and the reshaping 613; and once more to swap the order of the transpose and the table lookups 612, 614 (made adjacent by the previous swapping). After these swaps, table lookups 612, 614, 616 are adjacent and so can be fused into a single table lookup 619. As above, it is also possible to swap transpose operation 615 with table lookup 616 and to swap reshape operation 613 with table loops 614, 616, thereby obtaining a transformed graph in which fused table lookup 619 comes before reshaping 613 and transpose 615. Non-elementwise and/or non-reshaping operations 611, 617 are unchanged.

It may be noted that, in both example subgraphs resulting from the proposed reordering, there is no reshaping operation being applied to an output of a table lookup operation. Otherwise, the reshaping operation and the table lookup may be swapped. In particular, the resulting subgraphs are in the TLU-Only canonical form.

**Fig. 7** shows a detailed, yet non-limiting, example of optimizing a computer program. This figure does not show an implementation operation as in Fig. 4 that transforms a high-level computation graph to a low-level computation graph; for example, such an operation may have been applied previously to the techniques described with respect to this figure. The identification **Ident,** 420 of whether or not respective nodes can be implemented by a table lookup operation, and the subsequent determining **DFuse,** 450, that nodes can be fused, may be performed on a computation graph without such an implementation operation in between.

In particular, shown in the figure is a computation graph **CG1,** 711. This computation graph may be a low-level computation graph, meaning that respective nodes may represent respective operations that directly translate to an implementation in the execution environment. In particular, the computation graph **CG1** may comprise low-level operations that implement quantization and/or cast operations where needed. For example, in cases where the execution environment supports integer operations and table lookup operations, such as with homomorphic encryption, the computation graph may comprise nodes representing integer operations that are supported by the execution environment (e.g., integer addition and subtraction, scalar multiplication, matrix multiplication by a constant matrix, convolution with a constant matrix, etc.) and nodes representing operations that may be implemented with the table lookup operation (e.g., floating point operations such as an activation function, a quantization or part of it, etc.). Low-level computation graph **CG1** may also be referred to as an elementary op-graph, and can be an operation graph of Zama's Concrete-Numpy, available at https://github.com/zama-ai/concrete-numpy.

In particular, as also discussed for Fig. 4, the computation graph **CG1** may comprise a number of different types of node. In particular, as also discussed with respect to Fig. 4, the computation graph may comprise nodes of mixing type (**MIX**); of univariate function type (**UNI**); of reshaping type **(SHAPE);** and/or of table lookup operation type (**TLU**). As also discussed with respect to Fig. 4, for a given set of operations, their type can depend on other nodes of the graph and accordingly the operation may be implemented as a table lookup or not. This set of operations may include at least addition and multiplication. Other sets of operations may always or never be implemented as a table lookup.

Shown is an identification operation **Ident,** 720, which may determine for respective nodes of the computation graph **CG1** whether or not the respective node can be implemented by a table lookup operation, e.g., whether the node is of mixing type **MIX.** Identification operation **Ident** may be configured to determine that a node which has multiple inputs, can be implemented by a table lookup operation, based on determining that the multiple inputs have a common ancestor node, in particular such that the output of the node can be written as an elementwise function of the output of the common ancestor node. In particular, the figure shows computation graph **CG2** obtained by annotating, in computation graph CG1, the diagonally striped node as being implementable by a table lookup operation based on determining that its multiple inputs have a common ancestor, in the form of the horizontally striped node. It is noted that, whether this is the case for node with multiple inputs, depends on the structure of the graph. Accordingly, identification operation **Ident** may determine whether a node can be implemented as a lookup table not just based on the node itself but also based on other parts of the subgraph.

Following the identification operation **Ident,** a fusing determining operation **DFuse,** 750 may be used to determine, for the node that has been determined to be implementable by a table lookup operation, that one or more further nodes of the computation graph can be fused into the table lookup operation. This is illustrated in the figure by the computation graph **CG3** in which the fusable subgraph has been annotated. The fusable subgraph in this case is the subgraph that starts at the outgoing edge of the common ancestor node and ends at the node itself.

In this case, as illustrated in the figure, the identified subgraph may be replaced in computation graph CG3 by a node representing the single table lookup operation. This may be a TLU-type node as also described for Fig. 4. After this, the optimization may iteratively apply the identification **Ident** and fusing determining **DFuse** until no more nodes can be fused, for example.

Having fused the nodes, a writing operation **Write** may be performed, as also discussed with respect to Fig. 4. As discussed, the writing operation **Write** may output a transformed representation of the computer program in which the nodes are fused and implemented by a single table lookup, as is known per se.

The figure also shows an ordering operation **Ord** which, as also discussed with respect to Fig. 4, may reorder the computation graph **CG2** to fuse at least one operation preceding a reshaping node with at least one operation succeeding the reshaping node. This operation may be implemented as discussed for Fig. 4.

In particular, the following algorithms provide a detailed example of how to implement the identification operation **Ident** and the fusing determining operation **DFuse.** This example uses generic pattern detection techniques to find nodes that can be implemented as a table lookup operation and then fused. In particular, in the described algorithms, UnwantedProperty can be configured to determine if whether the given operation is a MIX or SHAPE operation. ConformsTo-FusingRules can be set configured to determine whether there is more than one TLU operation in the subgraph; whether the operations in the subgraph produce a tensor of a shape corresponding to the subgraph input tensor; and/or whether operations in the subgraph use constants that are the same shape as the input tensor.

In the algorithms below, in particular, the identification operation **Ident** may be implemented by the functions FindClosestAncestorsWithoutUnwantedProperty and FindLowestFusingPointCandidate, whereas the fusing determining operation **DFuse** may be represented by the function CreateFusableSubgraphFromTo. Accordingly, if an operation in the operation graph belongs to a subgraph found by Algorithm FindSubgraphToFuse, it may be implemented in TLU mode, and otherwise it may be implemented in native mode.

---

**Algorithm 1.** FindSubgraphToFuse

**Input:** OpGraph: Operation graph

---

TerminalOp ← NULL

**foreach** Op *in* Nodes(OpGraph) **do**　　*// e.g. UnwantedProperty = "Op is MIX or SHAPE"*

　　**if** UnwantedProperty ∈ Properties(Op) **then** TerminalOp ← Op; **break**

**if** TerminalOp = NULL **then return** NULL

ClosestAncestorsWithoutUnwantedProperty ←

　　　　FindClosestAncestorsWithoutUnwantedProperty(OpGraph, TerminalOp) *// **Alg. 2***

**if** Length(ClosestAncestorsWithoutUnwantedProperty) = 0 **then return** NULL

**if** Length(ClosestAncestorsWithoutUnwantedProperty) = 1 **then**

　　**return** CreateFusableSubgraphFromTo(OpGraph,　　　　　　　　　　　*// **Alg. 3***

　　　　　　ClosestAncestorsWithoutUnwantedProperty[0], TerminalOp)

*// find ancestor node that is MIX or SHAPE and mark as FusingPoint (fuse all nodes*

*// after this node, down to TerminalOp)*

FusingPoint ← NULL

**while** TRUE **do**

　　FusingPointCandidate ← FindLowestFusingPointCandidate(OpGraph,　　*// **Alg. 4***

　　　　　　　　ClosestAncestorsWithoutUnwantedProperty)

　　**if** FusingPointCandidate = NULL **then return** NULL

　　**if** UnwantedProperty ∉ Properties(FusingPointCandidate) **then** *// e.g. UnwantedProp.:*

　　　　FusingPoint ← FusingPointCandidate　　　　　　　　*// "Op is MIX or SHAPE"*

　　　　**break**

　　ClosestAncestorsWithoutUnwantedProperty ← { FusingPointCandidate }

**return** CreateFusableSubgraphFromTo(OpGraph, FusingPoint, TerminalOp)　　*// **Alg. 3***

---

---

**Algorithm 2.**   FindClosestAncestorsWithoutUnwantedProperty

**Input:**          OpGraph: Operation graph

**Input:**          Op: Op to search the ancestors

---

ClosestAncestorsWithoutUnwantedProperty ← {}

OpsToProcess ← { Op }

**while** OpsToProcess ≠ ∅ **do**

    ProcessedOps ← OpsToProcess

    OpsToProcess ← {}

    **foreach** Op *in* ProcessedOps **do**

        **foreach** PredOp *in* Predecessors(Op, OpGraph) **do**

            *// e.g. UnwantedProperty = "Op is MIX or SHAPE"*

            **if** UnwantedProperty ∉ Properties(PredOp) **then**

                ClosestAncestorsWithoutUnwantedProperty ←

                    ClosestAncestorsWithoutUnwantedProperty ∪ { PredOP }

            **else**

                OpsToProcess ← OpsToProcess ∪ { PredOp }

**return** ClosestAncestorsWithoutUnwantedProperty

---

---

| **Algorithm 3.** | CreateFusableSubgraphFromTo |
|---|---|
| **Input:** | OpGraph: Operation graph |
| | FromOp: Start op |
| | ToOp: End op |

---

SubgraphOps ← {}

OpsToProcess ← { ToOp }

**while** OpsToProcess ≠ ∅ **do**

    SubgraphOps ← SubgraphOps ∪ OpsToProcess

    ProcessedOps ← OpsToProcess

    OpsToProcess ← {}

    **foreach** Op *in* ProcessedOps **do**

        **if** Op = FromOp **then continue**

        **foreach** PredOp *in* Predecessors(Op, OpGraph) **do**

            OpsToProcess ← OpsToProcess ∪ { PredOp }

**foreach** Op *in* SubgraphOps         // e.g. *ConformsToFusingRules* = "more than one

    **if** ¬ConformsToFusingRules(Op) **then return** NULL     // *TLU op in subgraph"*

**return** CreateSubgraph(OpGraph, SubgraphOps)

---

---

| **Algorithm 4.** | FindLowestFusingPointCandidate |
|---|---|
| **Input:** | OpGraph: Operation graph |
| **Input:** | Ops: Set of operations for which the fusing point is being searched |

CommonAncestors ← Nodes(OpGraph)

---

**foreach** Op *in* Ops **do**

    // *Ancestor A of Op: There exists a path in the OpGraph from A to Op*

    // *Ancestors(Op, OpGraph):*

    //    $A \in Nodes(OpGraph)$:

    //       $\exists (N_0, N_1, N_2, \ldots, N_{K-1}, N_K)$ *where*

    //       $\forall i \in [0, K)$ $(N_i, N_{i+1}) \in Edges(OpGraph)$ $\wedge$ $N_0 = A$ $\wedge N_K = Op$

    Ancestors ← { Op } ∪ Ancestors(Op, OpGraph)

CommonAncestors ← CommonAncestors ∩ Ancestors

**foreach** CandidateOp *in* TopologicalSort(OpGraph) **do**

    **if** CandidateOp ∈ CommonAncestors ∧ IsFusingPoint(OpGraph, Ops, CandidateOp)

        **return** CandidateOp                                          **// Alg. 5**

**return** NULL

---

| **Algorithm 5.** | IsFusingPoint |
|---|---|
| **Input.** | OpGraph: Operation graph |
| **Input.** | Ops : Set of operations for which the fusing point is being searched |
| **Input.** | CandidateOp : Candidate fusing point |

Subgraph ← OpGraph()

**foreach** Op *in* Ops **do**

    *// Paths from A to Op: Set of all paths that start with A and end with Op in the OpGraph*

    *// Paths(A, Op, OpGraph):*

    *//*       $(N_0, N_1, N_2, \ldots, N_{K-1}, N_K)$*:*

    *//*         $\forall i \in [0, K) \ (N_i, N_{i+1}) \in Edges(OpGraph) \ \land \ N_0 = A \ \land N_K = Op$*

    **foreach** Path *in* Paths(CandidateOp, Op, OpGraph) **do**

        Nodes(Subgraph) ← Nodes(Subgraph) ∪ Nodes(Path)

        Edges(Subgraph) ← Edges(Subgraph) ∪ Edges(Path)

**foreach** Op *in* Nodes(Subgraph) **do**

    **if** Op ≠ CandidateOp

        *// Predecessor P of Op: There exists an edge in the OpGraph from P to Op*

        *// Predecessors(Op,OpGraph): P ∈ Nodes(OpGraph): (P, Op) ∈ Edges(OpGraph)*

        PredsInOpGraph ← Predecessors(Op, OpGraph)

        PredsInSubgraph ← Predecessors(Op, Subgraph)

        **if** PredsInOpGraph ≠ PredsInSubgraph **then return** FALSE

**return** TRUE

---

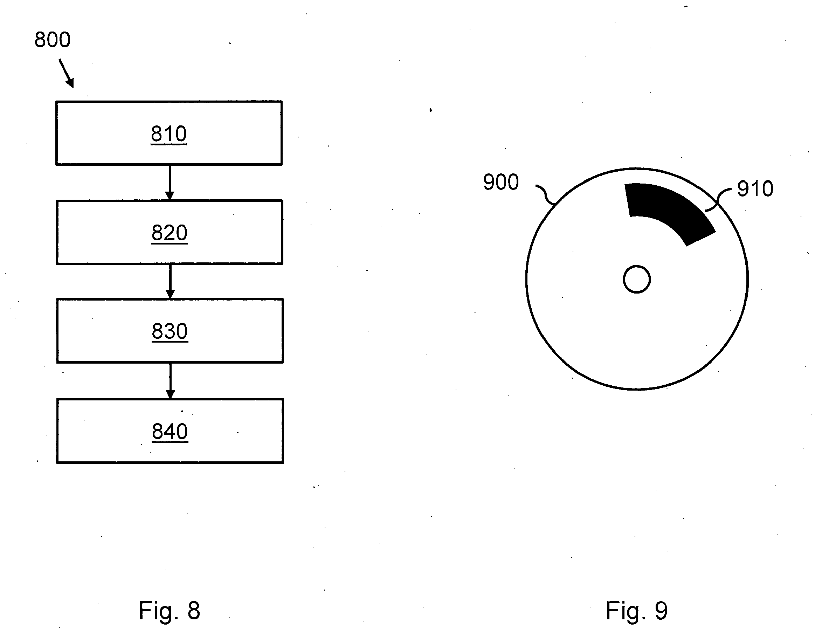

**Fig. 8** shows a block-diagram of computer-implemented method 800 of optimizing a computer program for an execution environment that supports a table lookup operation. The method 800 may correspond to an operation of the system 100 of Fig. 1. However, this is not a limitation, in that the method 800 may also be performed using another system, apparatus or device.

The method 800 may comprise, in an operation titled "ACCESS COMPUTATION GRAPH", accessing (810) a representation of the computer program as a computation graph. In the computation graph, respective nodes may represent respective operations. The method 800 may comprise, in an operation titled "DETERMINE TLU IMPLEMENTATION", determining 820, for respective nodes of the computation graph, whether or not the respective node can be implemented by a table lookup operation. The method 800 may comprise, in an operation titled "DETERMINE FUSING", determining 830, for a node that can be implemented by a table lookup operation, that one or more further nodes of the computation graph can be fused into the table lookup operation. The method 800 may comprise, in an operation titled "OUTPUT", outputting 840 a transformed representation of the computer program. In the transformed representation, node and the one or more further nodes may be fused into a single table lookup operation.

In particular, method 800 may be a compiler method. In particular, method 800 may take as input source code in a compiled or interpreted programming language (e.g., Python, C++, etc.) and compile the source code to determine the computation graph; and output the transformed representation in a representation that is executable by the execution environment, e.g., a homomorphic executable for FHE computation engine.

It will be appreciated that, in general, the operations of method 800 of Fig. 8 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 9,** instructions for the computer, e.g., executable code, may be stored on a computer readable medium 900, e.g., in the form of a series 910 of machine-readable physical marks and/or as a series of elements having different electrical, e.g., magnetic, or optical properties or values. The medium 900 may be transitory or non-transitory. Examples of computer readable mediums include memory devices, optical storage devices, integrated circuits, servers, online software, etc. Fig. 9 shows an optical disc 1100. Alternatively, the computer readable medium 900 may comprise data 910 representing a transformed representation of a computer program determined according to a method described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (800) of optimizing a computer program for an execution environment that supports a table lookup operation, wherein the method comprises:

   - accessing (810) a representation of the computer program as a computation graph, wherein respective nodes of the computation graph represent respective operations;
   - determining (820), for respective nodes of the computation graph, whether or not the respective node can be implemented by a table lookup operation;
   - determining (830), for a node that can be implemented by a table lookup operation, that one or more further nodes of the computation graph can be fused into the table lookup operation;
   - outputting (840) a transformed representation of the computer program wherein the node and the one or more further nodes are fused into a single table lookup operation.

2. The method (800) of claim 1, wherein the execution environment is a computation by a homomorphic encryption supporting at least an encrypted addition operation, an encrypted scalar multiplication operation, and an encrypted table lookup operation.

3. The method (800) of claim 1, wherein the table lookup operation is a hardware lookup table.

4. The method (800) of any preceding claim, wherein one or more operations from a first set of operations are never implemented by the table lookup operation; one or more operations from a second set of operations are implemented by the table lookup depending on the computation graph; and one or more operations from a third set of operations are always implemented by the table lookup operation.

5. The method (800) of claim 4, wherein the second set of types comprises at least an addition operation.

6. The method (800) of claim 4 or 5, comprising replacing a node by a first subgraph representing a first implementation if it is determined that the node can be implemented by a table lookup operation; and replacing the node by a second subgraph representing a second implementation otherwise.

7. The method (800) of claim 6, wherein the second implementation is configured to quantize an input to integer; apply an integer operation corresponding to the node to get an integer output; and dequantize the integer output.

8. The method (800) of any preceding claim, comprising determining that a node having multiple inputs can be implemented by a table lookup operation based on determining that the multiple inputs have a common ancestor.

9. The method (800) of any preceding claim, wherein an operation is applied to one or more input tensors and results in an output tensor, and wherein a table lookup operation is applied elementwise to a single input tensor.

10. The method (800) of claim 9, comprising obtaining a reshaping node representing an operation that reorganizes elements of one or more input tensors without changing their values, and reordering the computation graph to fuse at least one operation preceding the reshaping node with at least one operation succeeding the reshaping node.

11. The method (800) of any preceding claim, wherein the transformed representation of the computer program does not comprise a table lookup operation being applied to an output of a further table lookup operation.

12. The method (800) of claim 11, wherein the transformed representation of the computer program does not comprise a reshaping operation being applied to an output of a table lookup operation, wherein the reshaping operation rearranges one or more inputs without changing their values.

13. The method (800) of any preceding claim, wherein the computer program represents the evaluation of a machine learnable model, for example an artificial neural network, a generalized linear model, a decision tree, or an ensemble model.

14. A compiler system (100) for optimizing a computer program for an execution environment that supports a table lookup operation, wherein the system comprises:

- a data interface (120) for accessing a representation of the computer program as a computation graph, wherein respective nodes of the computation graph represent respective operations;
- a processor subsystem (140) configured to:

    - determine, for respective nodes of the computation graph, whether or not the respective node can be implemented by a table lookup operation;
    - determine, for a node that can be implemented by a table lookup operation, that one or more further nodes of the computation graph can be fused into the table lookup operation;
    - output a transformed representation of the computer program wherein the node and the one or more further nodes are fused into a single table lookup operation.

15. A transitory or non-transitory computer-readable medium (900) comprising data (910) representing

    - instructions which, when executed by a processor system, cause the processor system to perform the computer-implemented method according to any one of claims 1-13; and/or
    - a transformed representation of a computer program determined according to the computer-implemented method of any one of claims 1-13.

199

112

111

010

113

Fig. 2a

200

231
220
232
233

IN

OUT    @IN

OUT

LUT

240

241

Fig. 2b

021

100

040

120

121

140

125

180

122

126

010

Fig. 1

Fig. 3a

EP 4 333 356 A1

Fig. 3d

Fig. 3c

Fig. 3b

Fig. 4

Fig. 5c

Fig. 5b

Fig. 5a

Fig. 6a

Fig. 6b

Fig. 7

EP 4 333 356 A1

810

820

830

840

800

Fig. 8

900

910

Fig. 9

Europäisches
Patentamt

European
Patent Office

Office européen
des brevets

# EUROPEAN SEARCH REPORT

Application Number

EP 22 31 5194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAI YANG ET AL: "AutoGTCO: Graph and Tensor Co-Optimize for Image Recognition with Transformers on GPU", 2021 IEEE/ACM INTERNATIONAL CONFERENCE ON COMPUTER AIDED DESIGN (ICCAD), IEEE, 1 November 2021 (2021-11-01), pages 1-9, XP034057419, DOI: 10.1109/ICCAD51958.2021.9643487 [retrieved on 2021-12-08] * the whole document * ----- | 1-15 | INV. H04L9/00 G06F8/40 |
| X | CAI HAN HANCAI@MIT EDU ET AL: "Enable Deep Learning on Mobile Devices: Methods, Systems, and Applications", ACM TRANSACTIONS ON DESIGN AUTOMATION OF ELECTRONIC SYSTEMS, ACM, NEW YORK, NY, US, vol. 27, no. 3, 4 March 2022 (2022-03-04), pages 1-50, XP058690557, ISSN: 1084-4309, DOI: 10.1145/3486618 * the whole document * ----- | 1-15 | |
| X | US 10 901 715 B1 (RAIMAN JONATHAN [US]) 26 January 2021 (2021-01-26) * abstract * * column 1, line 7 - line 16 * ----- | 1-15 | TECHNICAL FIELDS SEARCHED (IPC) H04L G06F |

The present search report has been drawn up for all claims

| Place of search | Date of completion of the search | Examiner |
|---|---|---|
| Munich | 13 February 2023 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5194

This annex lists the patent family members relating to the patent documents cited in  the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | Publication date |
|---|---|---|---|---|
| US 10901715 | B1 | 26-01-2021 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Programmable bootstrapping enables efficient homomorphic inference of deep neural networks. **I. CHILLOTTI et al.** Cyber Security Cryptography and Machine Learning (CSCML 2021). Springer, 2021, vol. 12716, 1-19

- **B. JACOB et al.** *Quantization and training of neural networks for efficient integer-arithmetic-only inference*
- *Zama's Concrete-Numpy, https://github.com/zama-ai/concrete-numpy*